(19) **Europäisches Patentamt / European Patent Office / Office européen des brevets**

(11) **EP 2 444 150 A1**

(12) # EUROPÄISCHE PATENTANMELDUNG

(43) Veröffentlichungstag:
**25.04.2012 Patentblatt 2012/17**

(51) Int Cl.:
**B01J 21/06** *(2006.01)* **B01J 23/22** *(2006.01)*
**B01J 23/30** *(2006.01)* **B01J 37/00** *(2006.01)*
**B01D 53/86** *(2006.01)*

(21) Anmeldenummer: **10188521.8**

(22) Anmeldetag: **22.10.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **crenox GmbH**
**47829 Krefeld (DE)**

(72) Erfinder:
- **Auer, Gerhard Dr.**
  **47800 Krefeld (DE)**
- **Hipler, Frank Dr.**
  **47800 Krefeld (DE)**

(74) Vertreter: **HOFFMANN EITLE**
**Patent- und Rechtsanwälte**
**Arabellastraße 4**
**81925 München (DE)**

(54) **Trägerkatalysator aus Aufschlussrückständen der titanylsulfathaltigen Schwarzlösung**

(57) Die Erfindung betrifft eine Zusammensetzung umfassend Titandioxid-haltigen Aufschlussrückstand aus der Titandioxidherstellung und mindestens eine weitere Komponente, die katalytisch aktiv ist, sowie formstabile, katalytisch aktive Festkörper, die aus dieser Zusammensetzung erhalten und als Katalysator, zum Beispiel zur Verminderung von Stickoxiden, verwendet werden können.

EP 2 444 150 A1

**Beschreibung**

**Technisches Gebiet**

Die Erfindung betrifft eine Zusammensetzung umfassend TiO$_2$-haltigen Aufschlussrückstand aus der Titandioxidherstellung und mindestens eine weitere Komponente, die katalytisch aktiv ist, sowie formstabile, katalytisch aktive Festkörper, die aus dieser Zusammensetzung erhalten und als Katalysator zum Beispiel zur Verminderung von Stickoxiden verwendet werden können.

**Stand der Technik**

Trägerkatalysatoren haben eine große wirtschaftliche Bedeutung und stellen mengenmäßig die größte Gruppe der heterogenen Katalysatoren dar. Sie werden beispielsweise zur Aufarbeitung von fossilen Rohstoffen, bei der Weiterverarbeitung von Zwischenprodukten und bei der Synthese chemischer Produkte genutzt. Zudem haben Trägerkatalysatoren im Bereich der Abgasreinigung für den Emissionsschutz signifikant an ökonomischer Bedeutung gewonnen.

Titandioxid und titanhaltige Katalysatoren stellen hierbei einen bedeutenden Anteil. Kommerziell erhältliche Katalysatorträger auf Titandioxidbasis werden hauptsächlich durch Fällungsreaktionen von titanhaltigen Salzen, Hydrolyse titanhaltiger Verbindungen oder durch Flammenpyrolyse titanhaltiger Precursor hergestellt.

Trägerkatalysatoren spielen insbesondere beim katalytischen Abbau von Stickoxiden eine wichtige Rolle. Die Entstehung von Stickoxiden (NO$_x$) bei Verbrennungsprozessen ist unter Umweltgesichtspunkten problematisch, und es sind verschiedene Verfahren zur Reduktion von Stickstoffoxiden in Abgasen bekannt. Besondere Bedeutung hat die selektive katalytische Reduktion (SCR) erlangt, wobei die Stickoxide durch beigegebene stickstoffhaltige Verbindungen, bevorzugt Ammoniak oder Harnstoff, in Anwesenheit eines Katalysators reduziert werden. Die selektive katalytische Reduktion von Stickstoffoxiden mittels Ammoniak (NH$_3$-SCR) kann wie folgt zusammengefasst werden:

$$4\ NO + 4\ NH_3 + O_2 \xrightarrow{\textit{Katalysator}} 4\ N_2 + 6\ H_2O.$$

Einsatzgebiete sind im stationären Bereich etwa Kraftwerke, Kohlekraftwerke, Gaskraftwerke, Müllverbrennungsanlagen, Anlagen zur Salpetersäureproduktion oder - verarbeitung, Stahlwerke, sowie im mobilen Bereich Kraftfahrzeuge wie PKW und LKW sowie Schiffe.

Kommerzielle Katalysatoren für die SCR sind insbesondere Edelmetalle, Metalloxide und Zeolithe. Eine Übersicht liefert Pio Forzatti, *Present status and perspectives in de-NOx SCR catalysis,* in: Applied Catalysis A: General 222 (2001) 221-236. Ein wichtiges Katalysatorsystem sind die geträgerten WO$_3$- bzw. V$_2$O$_5$-WO$_3$-Katalysatoren auf einem TiO$_2$-Träger, wobei das TiO$_2$ regelmäßig überwiegend in der Anatasform vorliegt (siehe z.B. US 5,723,404 oder WO2006/044768).

**Zusammenfassung der Erfindung**

Vor diesem Hintergrund ist es die der vorliegenden Erfindung zugrundeliegende Aufgabe, einen ökonomisch herstellbaren Katalysatorträger bzw. Katalysator bereitzustellen, der eine gute Aktivität, insbesondere bei der Stickoxidreduktion, zeigt.

Diese Aufgabe wird erfindungsgemäß gelöst durch Bereitstellung einer Zusammensetzung, die (I) den titanhaltigen Aufschlussrückstand aus der Titandioxidherstellung nach dem Sulfatverfahren und (II) mindestens eine weitere Komponente enthält, die katalytisch aktiv ist, sowie durch Bereitstellung eines Katalysators oder Katalysatorrohstoffs enthaltend die Zusammensetzung.

Die Aufgabe wird alternativ gelöst durch Bereitstellung eines formstabilen katalytisch aktiven Festkörpers, der erhältlich ist durch Mischen der oben definierten Zusammensetzung mit Bindemitteln, Plastifizierern und ggf. weiteren Additiven, Formgebung der so erhaltenen Zusammensetzung, bevorzugt durch Extrudieren, und anschließender Kalzinierung, oder durch Bereitstellung eines formstabilen katalytisch aktiven Festkörpers, der erhältlich ist durch Aufbringen der oben definierten Zusammensetzung, ggf. zusammen mit Bindemitteln, Plastifizierern und weiteren Additiven, auf einen Träger und anschließender Kalzinierung.

Die Erfindung betrifft auch die Verwendung des Aufschlussrückstands bzw. der erfindungsgemäßen Zusammensetzung wie auch des erfindungsgemäßen formstabilen Festkörpers als Katalysator oder zur Herstellung eines Katalysators.

Ferner betrifft die Erfindung ein Verfahren zur Herstellung der erfindungsgemäßen Zusammensetzung, wobei das Verfahren folgende Schritte umfasst:

(a) Aufschluss eines titanhaltigen Ausgangsstoffes mit Schwefelsäure um eine feststoffhaltige Aufschlusslösung zu erhalten;
(b) Abtrennen der in der Aufschlusslösung enthaltenen Feststoffe, um einen Aufschlussrückstand und eine im Wesentlichen feststofffreie Aufschlusslösung zu erhalten;
(c) optional Neutralisieren und/oder teilweises Auswaschen der Verunreinigungen, insbesondere der Neutralsalze;
(d) Mischen des Aufschlussrückstands mit mindestens einer weiteren Komponente, die katalytisch aktiv ist, und
(e) optional Kalzinieren der erhaltenen Mischung.

## Figuren

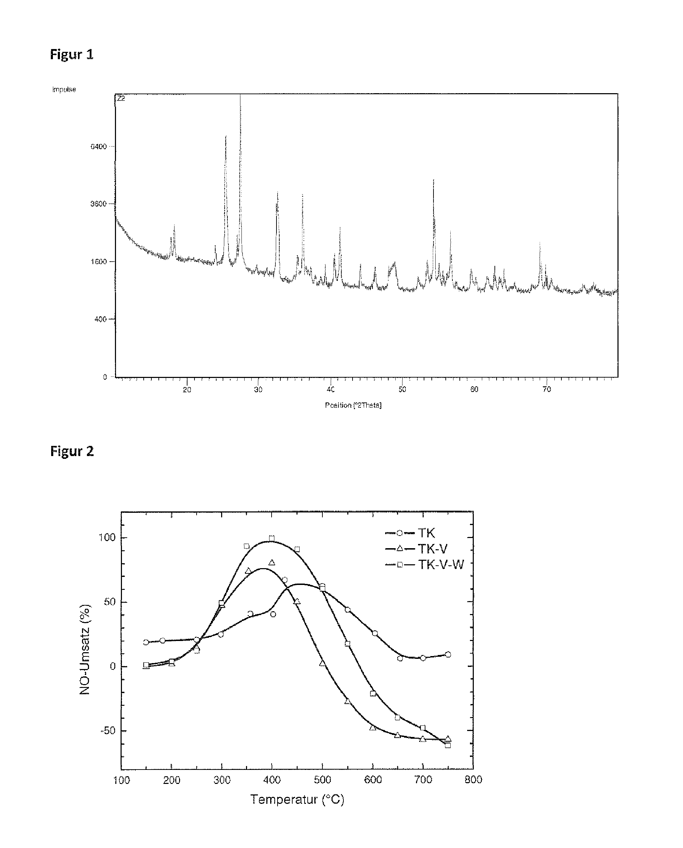

Figur 1 zeigt ein Röntgendiffraktogramm des gewaschenen und getrockneten Aufschlussrückstands. Dabei können u.a. folgende Verbindungen nachgewiesen werden: Rutil, Magnesiumtitanoxid, Ilmenit, und Anatas

Figur 2 zeigt die katalytische Aktivität (NO-Umsatz) eines erfindungsgemäßen Aufschlussrückstands (TK), einer erfindungsgemäßen Zusammensetzung aus Aufschlussrückstand und 1,5 Gew.% $V_2O_5$ (TK-V) sowie einer erfindungsgemäßen Zusammensetzung aus Aufschlussrückstand mit 1,5 Gew.% $V_2O_5$ und 10 Gew.% $WO_3$ (TK-V-W) im Temperaturbereich von 150 °C bis 750 °C.

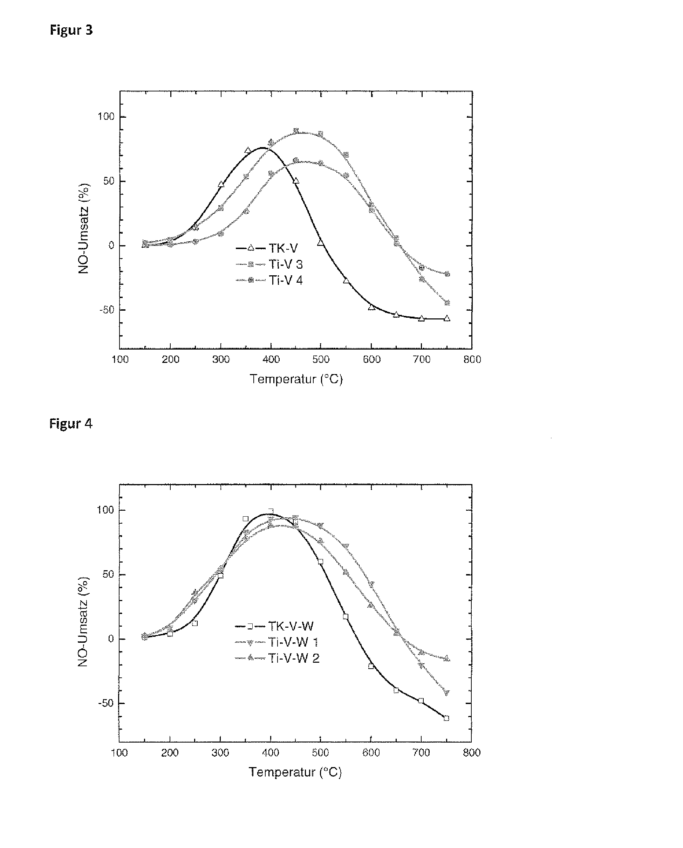

Figur 3 zeigt die katalytische Aktivität (NO-Umsatz) einer erfindungsgemäßen Zusammensetzung aus Aufschlussrückstand und 1,5 Gew.% $V_2O_5$ (TK-V) im Vergleich zu herkömmlichen geträgerten $V_2O_5$-Katalysatoren auf einem Anatas-$TiO_2$-Träger (Ti-V 3, ausgehend von einem Anatas mit einer BET-Oberfläche von 90 $m^2$/g; Ti-V 4 ausgehend von einem Anatas mit einer BET-Oberfläche von 350 $m^2$/g) im Temperaturbereich von 150 °C bis 750 °C.

Figur 4 zeigt die katalytische Aktivität (NO-Umsatz) einer erfindungsgemäßen Zusammensetzung aus Aufschlussrückstand mit 1,5 Gew.% $V_2O_5$ und 10 Gew.% $WO_3$ (TK-V-W) im Vergleich zu herkömmlichen geträgerten $V_2O_5$-$WO_3$-Katalysatoren auf einem Anatas-$TiO_2$-Träger (Ti-V-W 1 basierend auf einem Labormaterial und Ti-V-W 2 basierend auf kommerziell erhältlichem Material enthaltend crenox A-DW-1) im Temperaturbereich von 150 °C bis 750 °C.

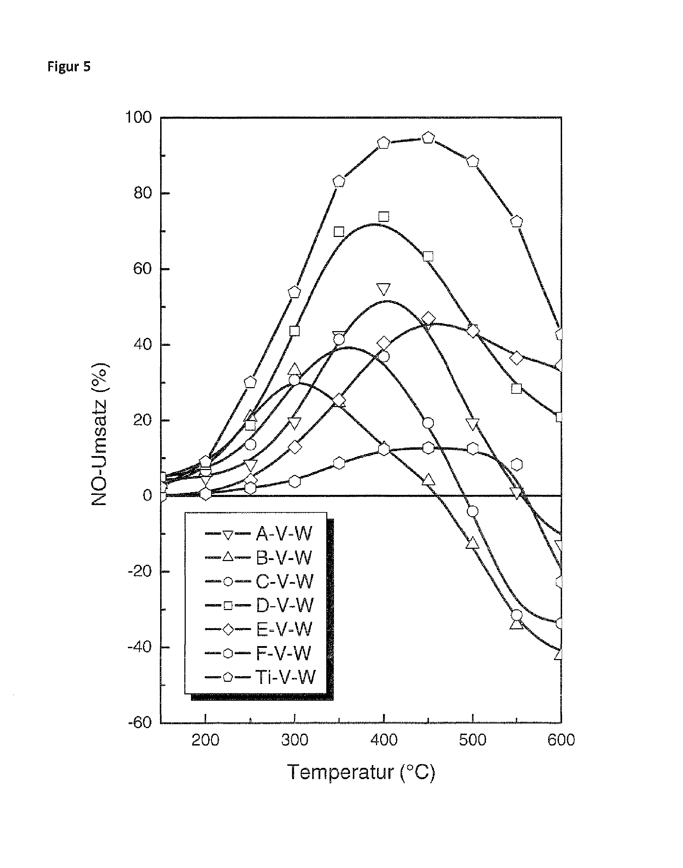

Figur 5 zeigt die katalytischen Aktivitäten (NO-Umsätze) von erfindungsgemäßen Zusammensetzungen aus unterschiedlich aufgearbeiteten Aufschlussrückständen, wie in den Beispielen 2A bis 2F beschrieben, mit 1,5 Gew.% $V_2O_5$ und 10 Gew.% $WO_3$ (A-V-W bis F-V-W) im Vergleich zu einem herkömmlich geträgerten $V_2O_5$-$WO_3$-Katalysator auf einem Anatas-$TiO_2$-Träger (Ti-V-W) im Temperaturbereich von 150 °C bis 750 °C.

## Detaillierte Beschreibung der Erfindung

Die im Folgenden beschriebenen Ausführungsformen der Erfindung können in beliebiger Weise miteinander kombiniert werden und führen auf diese Weise zu besonders bevorzugten Ausführungsformen.
Die folgende detaillierte Beschreibung offenbart spezifische und/oder bevorzugte Varianten der einzelnen erfindungsgemäßen Merkmale. Es ist zu verstehen, dass auch solche Ausführungsformen erfindungsgemäß und in der Regel sogar bevorzugt sind, die durch beliebige Kombinationen von zwei oder mehreren bevorzugten Ausführungsformen entstehen.
Soweit nicht anderweitig angegeben wird, werden die Begriffe "umfassend" oder "umfasst" im Zusammenhang mit der vorliegenden Anmeldung verwendet, um anzugeben, dass außer den explizit aufgeführten Komponenten optional weitere Komponenten vorhanden sein können. Die Begriffe sind allerdings auch so zu verstehen, dass hiervon auch die Ausführungsformen umfasst sind, die lediglich aus den aufgeführten Komponenten bestehen, also keine weiteren Komponenten als die aufgeführten enthalten.
Soweit nicht anderweitig angegeben wird, sind alle Prozentanteile gewichtsbezogene Prozentanteile. Angaben von Prozentanteilen oder sonstige relative Mengenangaben einer Komponente, die durch einen generischen Begriff definiert ist, sind so zu verstehen, dass sie sich auf die Gesamtmenge aller spezifischen Varianten beziehen, die unter den generischen Begriff fallen. Wenn eine generisch definierte Komponente in einer erfindungsgemäßen Ausführungsform weiterhin auf eine unter den generischen Begriff fallende spezifische Variante spezifiziert wird, so ist dies so zu verstehen, dass zusätzlich keine anderen unter den generischen Begriff fallenden spezifischen Varianten vorliegen, so dass die ursprünglich angegebene Gesamtmenge aller spezifischen Varianten sich nun auf die Menge der einen bestimmten spezifischen Variante bezieht.

Komponente (I): Der Aufschlussrückstand

Die Komponente (I) der erfindungsgemäßen Zusammensetzung ist der unlösliche Aufschlussrückstand, der bei der Gewinnung von Titandioxid nach dem Sulfatverfahren beim Aufschluss des titanhaltigen Ausgangsstoffes mit Schwefelsäure anfällt.

Bei der Titandioxidherstellung nach dem Sulfatverfahren entsteht nach dem Aufschluss der titanhaltigen Rohstoffe mit Schwefelsäure die sog. titanylsulfathaltige Schwarzlösung, welche noch einen gewissen Anteil an ungelösten Aufschlussrückständen enthält. Diese Feststoffanteile müssen vor der weiteren Verarbeitung aus der Schwarzlösung abgetrennt werden. Dies erfolgt in der Regel mittels Vakuumfiltern oder Filterpressen, meist nach vorheriger Anreicherung in Eindickern (Ullmann's Encyclopedia of Industrial Chemistry, 5. Auflage, Band A20, Seiten 276-278.

Der Aufschlussrückstand wird vorzugsweise in Form des durch Abtrennung gewonnenen Filterkuchens, besonders bevorzugt in Form des getrockneten Filterkuchens, eingesetzt. Die Trocknung kann mit einem beliebigen, dem Fachmann bekannten Verfahren und Aggregat erfolgen, beispielsweise in einem Trockenschrank, mit einem Bandtrockner, Sprühtrockner oder einem Spinflash-Trockner. Gegebenenfalls kann der getrocknete Aufschlussrückstand zur Verbesserung der weiteren Verarbeitbarkeit zu einem feinen Pulver gemahlen oder desagglomeriert werden, z. B. mittels einer Stiftmühle, einem Walzenstuhl, einer Bauermeistermühle oder anderen dem Fachmann bekannten Aggregaten.

Es kann jedoch auch von Vorteil sein, den Aufschlussrückstand in Form eines ungetrockneten Filterkuchens zu verwenden, da beim Herstellen von katalytisch wirkenden Zubereitungen, insbesondere SCR-DENOX-Katalysatoren, die titanhaltigen Materialien unter Zuhilfenahme von Wasser mit weiteren Additiven vermischt, verknetet und weiter verarbeitet werden. Dadurch kann eine kostenaufwändige Trocknung des Aufschlussrückstands vermieden werden. In einer Ausführungsform der Erfindung kann daher der Aufschlussrückstand in Form eines Filterkuchens oder einer Suspension mit einem Feststoffgehalt von kleiner als 90 Gew.-%, bevorzugt kleiner als 80 Gew.-%, verwendet werden.

Vorzugsweise wird der Filterkuchen ferner, ggf. vor einer Trocknung, mit Säure, besonders bevorzugt mit verdünnter Schwefelsäure, und/oder Wasser gewaschen, um die anhaftende titanylsulfathaltige Lösung zu verdrängen. Anschließend kann eine Base als Neutralisationsmittel zugegeben werden, bis ein pH-Wert von 5 bis 12 eingestellt ist. Durch Auswaschen des Sulfats aus dem Aufschlussfilterkuchen und anschließendes Neutralisieren kann ein sulfatarmes, neutralisiertes, feinteiliges Titankonzentrat erhalten werden. Der auf diese Weise erhaltene gewaschene Aufschlussfilterkuchen enthält wesentlich weniger Sulfate als der ursprüngliche Filterkuchen. Zur weiteren Reduzierung des Sulfatgehalts kann auch eine erneute Filtration nach vorheriger Redispergierung in Wasser vorgenommen werden.

Die Neutralisation des Filterkuchens kann dadurch erfolgen, dass der Filterkuchen mit Wasser redispergiert, mit einer Base als Neutralisationsmittel versetzt und anschließend erneut filtriert und gegebenenfalls nochmals gewaschen wird. Es ist auch möglich, dass die Neutralisation des Filterkuchens ohne erneutes Anmaischen direkt in oder auf dem Filtrieraggregat erfolgt, indem der Filterkuchen mit einer wässrigen Lösung des Neutralisationsmittels gewaschen wird. Es ist auch möglich, dass dem Filterkuchen zum Zwecke der Neutralisation feste oder flüssige Alkalien zugemischt bzw. in den Filterkuchen eingeknetet werden. Als Neutralisationsmittel eignen sich alle gängigen alkalischen Verbindungen, z. B. feste oder gelöste Alkali- oder Erdalkalihydroxide.

Alternativ kann der Filterkuchen so lange mit Wasser gewaschen werden, bis er neutral oder annähernd neutral reagiert, so dass die Zugabe eines Neutralisationsmittels ganz oder teilweise entfallen kann.

Jedoch kann ein gewisser Sulfatgehalt und eine gewisse Acidität - insbesondere für die Verwendung als SCR-DENOX-Katalysator - z.B. hinsichtlich der katalytischen Aktivität von Vorteil sein. In einer erfindungsgemäßen Ausführungsform weist der verwendete Aufschlussrückstand, bezogen auf den Feststoffgehalt des Aufschlussrückstands, deshalb vorzugsweise einen Sulfatgehalt von 1,0 bis 6,0 Gew.%, bevorzugt 3,0 bis 5,0 Gew.%, auf. Für andere katalytische Anwendungen kann ein Sulfatgehalt von 3 bis 15 Gew.%, insbesondere von 4 bis 12 Gew.%, vorteilhaft sein.

Der pH-Wert des verwendeten Aufschlussrückstands beträgt vorzugsweise 1 bis, besonders bevorzugt 1,5 bis 3.

Der verwendete Aufschlussrückstand, der im Wesentlichen nicht aufgeschlossenes Erz enthält, weist vorzugsweise einen $TiO_2$-Gehalt von 10 bis 90 Gew.%, besonders bevorzugt 25 bis 70 Gew.% und am meisten bevorzugt 40 bis 60 Gew.%, bezogen auf den Feststoffanteil, auf. Die Angabe des $TiO_2$-Gehaltes ergibt sich aus elementanalytischen Untersuchungen und erfasst sowohl kristallines Titanoxid als auch nichtkristalline, amorphe Anteile.

Das $TiO_2$ liegt vorzugsweise teilweise in Rutilmodifikation vor. Insbesondere beträgt die Intensität des Rutil-Hauptreflexes bei 2theta = 27,5° mindestens 10 % der Intensität des intensivsten aller übrigen Reflexe eines Röntgenpulverdiagramms, bevorzugt mindestens 30%, besonders bevorzugt mindestens 80%. Die röntgenkristallinen Phasen können durch Röntgendiffraktometrie qualitativ und quantitativ bestimmt werden (siehe z.B. H. Krischner und B. Koppelhuber-Bitschnau, Röntgenstrukturanalyse und Rietveldmethode, 5. Auflage, Friedr. Vieweg & Sohn Verlagsgesellschaft mbH, Braunschweig/Wiesbaden, 1994).

Der Aufschlussrückstand enthält vorzugsweise sowohl Magnesiumtitanat (z.B. in Form von $MgTi_2O_5$ und/oder $Mg_{0,75}Ti_{2,25}O_5$) als auch Eisentitanat (Ilmenit $FeTiO_3$) und Calciumtitanat (z.B. $CaTiO_3$).

Weiterhin enthält der Ausschlussrückstand vorzugsweise Eisenoxide, vorzugsweise in einer Menge von 0,5 bis 30 Gew.%, noch bevorzugter 2 bis 20 Gew.%, berechnet als $Fe_2O_3$.

Ferner weist der Ausschlussrückstand vorzugsweise einen Aluminiumgehalt (als $Al_2O_3$) von 0,5 bis 20 Gew.%, vorzugsweise von 2 bis 10 Gew.%, auf. Zudem weist der Ausschlussrückstand vorzugsweise einen Siliziumgehalt (als $SiO_2$) von 5 bis 40 Gew.%, vorzugsweise von 10 bis 20 Gew.%, auf.

Der unkalzinierte Aufschlussrückstand, welcher zur Herstellung der erfindungsgemäßen Zusammensetzung verwendet wird, weist vorzugsweise eine BET-Oberfläche von 1 bis 150 $m^2$/g auf, besonders bevorzugt 3 bis 50 $m^2$/g, und insbesondere bevorzugt 5 bis 30 $m^2$/g. Die Bestimmung der BET-Oberfläche erfolgt dabei nach DIN ISO 9277 mittels $N_2$ bei 77 K an einer bei 140 °C während 1 Stunde entgasten und getrockneten Probe. Die Auswertung erfolgt über Mehrpunktbestimmung (10-Punkt-Bestimmung).

Ein bevorzugter saurer Aufschlussrückstand ist z.B. das in DE 197 25 018 B4 in Beispiel 3 beschriebene Material. Dieses Material ist beispielsweise zur Herstellung von DENOX-Katalysatoren gut geeignet.

Ein bevorzugter neutraler und salzarmer (insbesondere natriumarmer) Aufschlussrückstand ist z.B. das in DE 197 25 018 B4 in Beispiel 4 beschriebene Material. Dieses Material ist beispielsweise zur Herstellung von Katalysatoren geeignet, bei denen Na-Verbindungen unerwünscht sind.

Zur Herstellung eines Katalysators aus diesem Aufschlussrückstand wird dieses in der Regel mit einer weiteren Komponente (II) versetzt, die katalytisch aktiv ist, vorzugsweise mit einer Wolframverbindung und/oder Vanadiumverbindung, wie unten näher ausgeführt.

Mischung aus Aufschlussrückstand und zusätzlichem Titandioxid ($TiO_2$)

Vor dem Versetzen mit der katalytisch aktiven Komponente (II) kann der Aufschlussrückstand mit zusätzlichem Titandioxid, das z.B. herkömmlich als Katalysator oder Katalysatorträger verwendet wird, vermischt werden. Das zusätzliche Titandioxid kann aber auch als katalytisch aktive Komponente (II) verwendet werden.

In einer Ausführungsform stellt die Erfindung somit auch eine Zusammensetzung bereit, die den oben beschriebenen Aufschlussrückstand, zusätzliches Titandioxid und ggf. mindestens eine weitere Komponente enthält, die katalytisch aktiv ist.

Dieses Titandioxid, welches in Mischung mit dem Aufschlussrückstand verwendet werden kann, ist vorzugsweise ein Titanoxidhydrat. Vorzugsweise liegt das zusätzliche Titandioxid bzw. Titanoxidhydrat in der Anatasform vor. Das zusätzliche Titandioxid, vorzugsweise das zuvor beschriebene Titanoxidhydrat, kann aber auch ein durch Röntgendiffraktometrie bestimmtes Verhältnis von Titandioxid in der Anatasform zu Titandioxid in der Rutilform von größer als 90:10, besonders bevorzugt größer als 99:1, aufweisen. Die röntgenkristallinen Phasen können durch Röntgendiffraktometrie qualitativ und quantitativ bestimmt werden (siehe z.B. H. Krischner und B. Koppelhuber-Bitschnau, Röntgenstrukturanalyse und Rietveldmethode, 5. Auflage, Friedr. Vieweg & Sohn Verlagsgesellschaft mbH, Braunschweig/Wiesbaden, 1994).

Partikel dieses Titanoxidhydrats können beispielsweise durch Hydrolyse einer schwefelsäurehaltigen Titanylsulfatlösung erhalten werden. Je nach Herkunft und Zusammensetzung der schwefelsäurehaltigen Titanylsulfatlösung wird bei der Hydrolyse eine schwefelsaure Suspension von Titanoxidhydrat erhalten, welche noch unerwünschte Verunreinigungen, insbesondere Schwermetalle, enthalten kann. In der Regel werden deshalb ein oder mehrere Reinigungsschritte vorgenommen, um das Titanoxidhydrat von unerwünschten Verunreinigungen zu befreien.

Bevorzugt werden Titanoxidhydratpartikel verwendet, die durch Hydrolyse von Titanylsulfat entstehen, welches beim Herstellungsverfahren für Titandioxid nach dem Sulfatverfahren anfällt. Dieses Verfahren wird beispielsweise in Industrial Inorganic Pigments, 3. Auflage, Hrsg. Gunter Buxbaum, Wiley-VCH, 2005 beschrieben.

Der Sulfatgehalt des Titanoxidhydrat beträgt vorzugsweise bis zu 2,5 Gew.%, bezogen auf $TiO_2$. So kann der Sulfatgehalt 0,5 bis 2,5, bevorzugt 1,5 bis 2,5 Gew.%, bezogen auf $TiO_2$ betragen, aber auch kleiner als 0,5 Gew.% sein.

Das Titanoxidhydrat weist vorzugsweise eine BET-Oberfläche von 40 bis 300 $m^2$/g, besonders bevorzugt 60 bis 150 $m^2$/g auf. Die Bestimmung der BET-Oberfläche erfolgt dabei nach DIN ISO 9277 mittels $N_2$ bei 77 K an einer bei 140 °C während 1 Stunde entgasten und getrockneten Probe aus den Titanoxidhydratpartikeln. Die Auswertung erfolgt über Mehrpunktbestimmung (10-Punkt-Bestimmung).

Erfindungsgemäß ist es bevorzugt, den Aufschlussrückstand mit dem zusätzlichen Titandioxid, vorzugsweise dem oben beschriebenen Titanoxidhydrat, in einem Gewichtsverhältnis von größer als 50:50, besonders bevorzugt größer als 70:30, zu mischen. Höhere Gehalte an Titanoxidhydrat bewirken dabei in der Regel eine höhere katalytische Aktivität, höhere Gehalte an Aufschlussrückstand bewirken dabei niedrigere Kosten und eine bessere Verarbeitbarkeit.

Komponente (II) und katalytische Aktivierung

Zur Herstellung der erfindungsgemäßen Zusammensetzung wird der Aufschlussrückstand allein oder die Mischung aus dem Aufschlussrückstand und dem oben beschriebenen zusätzlichen Titandioxid, vorzugsweise dem oben beschriebenen Titanoxidhydrat, mit einer weiteren Komponente (II) versetzt, die katalytisch aktiv ist. Dabei fungieren der Aufschlussrückstand allein bzw. die Mischung aus dem Aufschlussrückstand und dem oben beschriebenen zusätzlichen vorzugsweise als Trägermaterial. Es ist aber auch möglich, dass das zusätzliche Titandioxid als katalytisch aktive Komponente (II) dient, während der Aufschfussrückstand vorwiegend als Trägermaterial dient.

Die Komponente (II) kann zum Beispiel zum Zwecke einer Dotierung, wahlweise Oberflächendotierung oder bulk-Dotierung, oder Beschichtung aufgebracht werden, wobei das Aufbringen vorteilhaft durch imprägnieren, Fällungsreaktionen, Chemical Solution Deposition, Abscheidungen aus der Gasphase wie etwa Chemical Vapour Deposition (CVD) oder Atomic Layer Deposition (ALD) erfolgen kann.

Der Aufschlussrückstand bzw. die Mischung aus Aufschlussrückstand und dem zusätzlichen Titandioxid kann mittels einer großen Zahl dem Fachmann bekannter verschiedener physikalischer und chemischer Methoden den Anwendungserfordernissen angepasst werden und sowohl als Katalysator als auch Katalysatorträger wirken. Hierzu kann der Fachmann zum Beispiel den Aufschlussrückstand oder die Mischung aus Aufschlussrückstand und dem zusätzlichen Titandioxid, vorzugsweise dem oben beschriebenen Titanoxidhydrat, auch mit weiteren Komponenten wie beispielsweise Glasfasern oder Plastifizierhilfsmittel mischen, extrudieren oder auf andere Trägermaterialien auftragen.

Die Komponente (II) kann ferner jede Komponente sein, die eine katalytische Wirkung, z.B. bei der Aufarbeitung von fossilen Rohstoffen, der Weiterverarbeitung von Zwischenprodukten und der Synthese chemischer Produkte oder im Bereich der Abgasreinigung, aufweist. Beispielhaft sind hier der katalytische Abbau von Stickoxiden ($NO_X$), die katalytische Oxidation von $SO_2$, die Rußoxidation, die Oxidation von Kohlenwasserstoffen, die oxidative Dehydrogenierung, Isomerisierungs-, Epoxidierungs- und Aldolreaktionen zu nennen.

Die Komponente (II) kann beispielsweise ein Metall, ein Metalloxid oder eine andere Metallverbindung sein. Insbesondere kann die Komponente (II) mindestens ein Element enthalten, das aus der Gruppe ausgewählt wird aus Pt, Pd, Rh, Ru, Au, Ag, Co, Cu, Ce, Ni, V, W, Mo, Sb, Bi, W, La, Y, Sc, Zr, Hf, Ta, Tb, Ce, Yb, Er, und Sm besteht.

Vorzugsweise enthält die erfindungsgemäße Zusammensetzung mindestens 0,05 Gew.%, bevorzugt mindestens 0,5 Gew.%, eines Elements, das aus der Gruppe ausgewählt wird, die aus Pt, Pd, Rh, Ru, Au, Ag, Co, Cu, Ce, Ni, V, W, Mo, Sb, Bi, W, La, Y, Sc, Zr, Hf, Ta, Tb, Ce, Yb, Er, und Sm besteht.

Nachdem der Aufschlussrückstand bzw. die Mischung aus dem Aufschlussrückstand und zusätzlichem Titandioxid mit der Komponente (II) versetzt wurde, kann die Zusammensetzung bei einer Temperatur von vorzugsweise 300 bis 900°C, besonders bevorzugt 400 bis 700°C, für vorzugsweise 0,1 bis 20 Stunden, besonders bevorzugt 0,5 bis 3 Stunden, kalziniert werden.

In einer bevorzugten Ausführungsform enthält die Zusammensetzung Wolframverbindungen. In einer weiteren bevorzugten Ausführungsform enthält die Zusammensetzung Vanadiumverbindungen. Die Zusammensetzung kann aber vorzugsweise auch Wolfram- und Vanadiumverbindungen enthalten. Bezogen auf den Feststoffgehalt der Zusammensetzung enthält die Zusammensetzung besonders bevorzugt mindestens 1,0 Gew.% an Wolfram, berechnet als $WO_3$, und/oder mindestens 0,05 Gew.% an Vanadium, berechnet als $V_2O_5$.

Vorzugsweise wird hierzu das Trägermaterial, das den Aufschlussrückstand bzw. die Mischung aus Aufschlussrückstand und dem zusätzlichen Titandioxid enthält, mit einer wolframhaltigen, vorzugsweise wolframathaltigen Lösung (z.B. Ammoniumwolframat (($NH_4)_{10}W_{12}O_{41} \cdot 5\,H_2O$)) getränkt, z.B. wird eine Aufschlämmung des Trägermaterials in der Ammoniumwolframatlösung über eine bestimmte Zeit gerührt. Hierbei wird so vorgegangen, dass nach anschließender Kalzinierung der $WO_3$-Gehalt 1,0 bis 20 Gew.%, bevorzugt 1,0 bis 5,0 Gew.%, in Bezug auf die Gesamtmenge an Trägermaterial und $WO_3$, beträgt. Die Einstellung des $WO_3$-Gehaltes kann z.B. durch die Konzentration der Wolframatlösung erfolgen und durch Atomabsorptionsspektroskopie kontrolliert werden.

Nach dem Versetzen mit der wolframhaltigen Lösung wird das (beschichtete) Trägermaterial gegebenenfalls abfiltriert, getrocknet, vorzugsweise durch Sprühtrocknen, und anschließend kalziniert. Zur Kalzinierung werden Temperaturen von über 150 °C, vorzugsweise 350 bis 600 °C, und besonders bevorzugt 450 bis 550 °C angewendet.

Das so erhaltene wolframhaltige Träger- oder Katalysatormaterial (z.B. das wolframhaltige Titankonzentrat) weist vorzugsweise eine BET-Oberfläche von 3 bis 70 $m^2$/g, vorzugsweise 3 bis 50 $m^2$/g, besonders bevorzugt 5 bis 30 $m^2$/g, auf. Die BET-Oberfläche wird gemäß dem oben beschriebenen Verfahren gemessen.

Es ist bevorzugt, den $WO_3$-Gehalt und die BET-Oberfläche derart aufeinander abzustimmen, dass $WO_3$ in einer Menge von 0,05 bis 0,20 Gew.%/$m^2$ vorliegt, bezogen auf das Gesamtgewicht von Trägermaterial und $WO_3$.

Das ggf. wolframhaltige Trägermaterial kann mit wenigstens einem (weiteren) Metalloxid ausgewählt aus der Gruppe bestehend aus Vanadium, Molybdän, Eisen, Chrom, Kupfer, Niob, Nickel, Kobalt, Antimon, Bismuth, Lanthan, Yttrium, Scandium, Zirkonium, Magnesium, Hafnium, Tantal, Terbium, Cer, Ytterbium, Erbium, Samarium, Cer, Kobalt, Barium und Mangan, und/oder mit wenigstens einem Metall ausgewählt aus der Gruppe bestehend aus Silber, Gold, Ruthenium, Palladium, Platin, und Rhodium versetzt werden.

Die erfindungsgemäße Zusammensetzung kann außerdem vorzugsweise eine Vanadiumverbindung, besonders bevorzugt $V_2O_5$, und zwar vorzugsweise in einer Menge von 0,05 bis 3,0 Gew.% $V_2O_5$, besonders bevorzugt 1,0 bis 3,0 Gew.% $V_2O_5$, am meisten bevorzugt 1,2 bis 2,0 Gew.% $V_2O_5$, in Bezug auf das Gesamtgewicht von Trägermaterial, $V_2O_5$ und ggf. $WO_3$, enthalten

Im Falle der Anwendung als DeNOx-Katalysator, zum Beispiel bei der $NH_3$-SCR-Katalyse, kann der Fachmann durch gezielte Variation des aufzubringenden Vanadiumoxidgehaltes die Aktivität in einem gegebenen Temperaturbereich leicht steuern. Die Wahl der aufzubringenden Mengen erfolgt durch gezielte Mengenvariation in entsprechenden Versuchsreihen. So ist bekannt, dass hohe $V_2O_5$-Konzentrationen (z.B. 3 % $V_2O_5$) eine hohe Aktivität des Katalysators bei relativ niedrigen Temperaturen (z.B. unterhalb 300°C) bewirken, jedoch bei höheren Temperaturen einen stärkeren Aktivitätsverlust und zudem eine erhöhte und zugleich unerwünschte Ammoniakoxidation mit sich bringen. Durch Verringerung der $V_2O_5$-Konzentration (z.B. 0,5 bis 2 % $V_2O_5$) wird die Eignung des Katalysators für einen höheren bzw, aufgeweiteten Temperaturbereich ermöglicht.

Das $V_2O_5$ kann zugeführt werden, indem die erfindungsgemäße Zusammensetzung, die den Aufschlussrückstand, ggf. zusätzliches Titandioxid und ggf. $WO_3$ in einer vanadiumhaltigen Lösung getränkt und anschließend (nochmals) kalziniert wird. Die vanadiumhaltige Lösung ist vorzugsweise eine vanadathaltige Lösung (z.B. mit Ammoniummetavanadat), vanadiumoxalathaltige Lösung oder vanadiumsulfathaltige Lösung. Vor der Kalzinierung wird das vanadiumhaltige Pulver gegebenenfalls filtriert und getrocknet, vorzugsweise sprühgetrocknet. Bevorzugte Kalziniertemperaturen liegen in dem Bereich von 300 bis 700 °C, wobei die einzustellende Teilchengröße, BET, Porengröße des Materials ebenso wie das Zersetzungsverhalten der vanadiumhaltigen Ausgangsverbindung maßgeblich ist. Im Falle des Ammoniummetavanadates ist die Zersetzung für gewöhnlich schon bei 300 C abgeschlossen.

Die erfindungsgemäße Zusammensetzung weist vorzugsweise einem Titangehalt von 6 bis 54 Gew.% auf.

Weiterhin weist die Zusammensetzung vorzugsweise einen pH-Wert von 1 bis 5, insbesondere von 1,5 bis 3, auf.

In einer Ausführungsform weist die Zusammensetzung ferner nach Kalzinierung eine BET-Oberfläche von 3 bis 70 $m^2$/g, vorzugsweise 3 bis 50 $m^2$/g, besonders bevorzugt 5 bis 30 $m^2$/g, aufweist. Wie oben erwähnt, erfolgt die Kalzinierung im allgemeinen bei einer Temperatur von vorzugsweise 300 bis 900°C, besonders bevorzugt 400 bis 700°C, für vorzugsweise 0,1 bis 20 Stunden, besonders bevorzugt 0,5 bis 3 Stunden.

Der Sulfatgehalt der Zusammensetzung beträgt vorzugsweise 0,1 bis 10 Gew.%, besonders bevorzugt 0,5 bis 3,0 Gew.%, bezogen auf den Feststoffanteil der Zusammensetzung.

In einer Ausführungsform liegt die Zusammensetzung in Form eines Filterkuchens oder einer Suspension mit einem Feststoffgehalt von kleiner als 90 Gew.%, bevorzugt kleiner als 80 Gew.% vor.

Das durch Röntgendiffraktometrie bestimmte Verhältnis von Titandioxid in Rutilform zu anderen kristallinen Phasen in der Zusammensetzung wird durch das Intensitätsverhältnis des Rutil-Hauptreflexes bei 2theta = 27,5° und des intensivsten aller übrigen Reflexe eines Röntgenpulverdiagramms ausgedrückt. Dabei beträgt die Intensität des Rutil-Hauptreflexes bei 2theta = 27,5° mindestens 10 % der Intensität des intensivsten aller übrigen Reflexe eines Röntgenpulverdiagramms, bevorzugt mindestens 30%, besonders bevorzugt mindestens 80%.

Der formstabile katalytisch aktivierte Festkörper

Zur Herstellung des erfindungsgemäßen formstabilen Festkörpers aus der erfindungsgemäßen Zusammensetzung (also dem katalytisch aktivierten Trägermaterial) wird die Zusammensetzung mit organischen Bindemitteln und ggf. Weichmachern und weiteren Additiven wie Glasfasern vermischt, vorzugsweise unter Anwesenheit von Wasser, um eine keramische Paste herzustellen. Die Zusammensetzung wird hierbei vorzugsweise in einer Menge von 60 bis 90 Gew.%, insbesondere 70 bis 80 Gew.% in Bezug auf die so erhaltene Mischung verwendet.

Als Bindemittel und/oder Thixotropiemittel können Schichtsilicate wie Bentonit und Kaolin herangezogen werden. Typische Beispiele für diese Minerale mit schichtförmigen Baueinheiten (Phyllosilicate) sind Serpentin $Mg_3(OH)_4$ $[Si_2O_5]$, Kaolinit $Al_2(OH)_4[Si_2O_5]$, sowie Montmorillonit als Hauptmineral des Bentonits.

Weitere Additive, die in der Mischung eingesetzt werden können, umfassen beispielsweise Glasfasern zur Strukturverstärkung (z.B. mit einem Anteil von 5 bis 15 Gew.-%), Acrylpolymere als Bindemittel, Cellulose oder Cellulosederivate als Quell-/Plastifizierungsmittel, Ammoniumhydroxid, organische Säuren wie z.B. Milchsäure oder Oxalsäure als Lösungsvermittler und/oder Komplexbildner, sowie Aminoalkohole wie z.B. Aminomethylpropanol oder Monoethanolamin zur pH-Einstellung.

Bei der weiteren Verarbeitung des so erhaltenen Gemisches aus der erfindungsgemäßen Zusammensetzung und den Bindemitteln und ggf. Weichmachern und weiteren Additiven kann im wesentlichen zwischen zwei Varianten unterschieden werden, nämlich zwischen der Herstellung von sogenannten Vollkatalysatoren und der Herstellung von Schichtkatalysatoren, z.B. sogenannten Plattenkatalysatoren.

Unter Vollkatalysator versteht man einen formstabilen Festkörper, der vollständig bzw. durchgehend aus dem oben beschriebenen Gemisch aus der erfindungsgemäßen pulverigen Zusammensetzung und den Bindemitteln und ggf. Weichmachern und weiteren Additiven hergestellt wird. Unter "formstabil" wird erfindungsgemäß im wesentlichen "nicht-pulverig" und selbsttragend verstanden. Hierzu wird dieses Gemisch vorzugsweise geknetet und dann in eine bestimmte Form gebracht, vorzugsweise durch Extrudieren oder Pressen. Besonders bevorzugt wird das Gemisch zu einem keramischen Monolithen extrudiert, der als wabenförmiger Festkörper beschrieben werden kann. Hierbei können die Waben beliebige, dem Fachmann bekannte geometrische Formen annehmen. Die Waben sind im Allgemeinen quadratisch im Querschnitt und nicht sechseckig, wie der Name vermuten lässt. Bevorzugt werden formstabile Festkörper mit einem Trägermaterial-Gehalt von mindestens 80 Gew.% in Bezug auf die Gesamtmasse.

Nach dem Extrudieren bzw. Pressen wird der Festkörper getrocknet und anschließend kalziniert. Die so erhaltenen Wabenkörper weisen vorzugsweise eine Wanddicke von 0,5 bis 2 mm und eine Kanalbreite von 3 bis 10 mm auf.

Bei der Herstellung von Schichtkatalysatoren wie Plattenkatalysatoren wird wie folgt vorgegangen: Das erhaltene Gemisch aus der erfindungsgemäßen, vorzugsweise pulverigen, Zusammensetzung mit ggf. Bindemitteln, Weichmachern und/oder weiteren Additiven wird auf ein Trägermaterial aufgebracht und anschließend getrocknet und kalziniert. Das Trägermaterial kann ein geometrischer Körper, vorzugsweise formgebende und ggf. perforierte Platten, z.B. aus Papier oder Keramik, oder Metall bzw. Metallnetze sein.

Erfindungsgemäß bevorzugt ist ein Vollkatalysator.

Anwendungen in der Katalyse

Die erfindungsgemäßen Zusammensetzungen und Formkörper eignen sich gut als Katalysatoren.

Der Aufschlussrückstand bzw. die erfindungsgemäßen, hiervon abgeleiteten Produkte eignen sich sehr gut zur Verwendung in Verfahren zur *Rauchgasentstickung (DeNOx)* als Denitrierungskatalysator für eine effiziente katalytische Reduktion von Stickstoffoxiden ($NO_x$) in Abgasen mit stickstoffhaltigen Verbindungen, bevorzugt Ammoniak oder stickstoffhaltigen Ausgangsverbindungen, die sich während oder kurz vor der Reaktion mit $NO_x$ zu Ammoniak umwandeln, hierbei besonders bevorzugt Harnstoff. Vor allem die Verwendung des Aufschlussrückstandes anstelle von oder in Kombination mit Titandioxid in der selektiven katalytischen Reduktion (SCR) von Stickstoffoxiden mittels Ammoniak gemäß

$$4\ NO + 4\ NH_3 + O_2 \xrightarrow{\text{\textit{Katalysator}}} 4\ N_2 + 6\ H_2O$$

ist hierbei von Interesse. Einsatzgebiete sind im stationären Bereich etwa Kraftwerke, Kohlekraftwerke, Gaskraftwerke, Müllverbrennungsanlagen, Anlagen zur Salpetersäureproduktion oder -verarbeitung, Stahlwerke, sowie im mobilen Bereich Kraftfahrzeuge, PKW, LKW, Schiffe.

Die Erfindung stellt insbesondere die Verwendung des erfindungsgemäßen formstabilen Festkörpers als Katalysator zur Verminderung von Stickoxiden bereit, insbesondere für die selektive katalytische Reduktion (SCR), und zwar auch für die schnelle SCR (fast SCR), bei der folgende Reaktionen ablaufen:

$$2\ NH_3 + NO + NO_2 \rightarrow 2\ N_2 + 3\ H_2O \text{ (NO und } NO_2 \text{ im Abgas, schnell)}$$

$$8\ NH_3 + 6\ NO_2 \rightarrow 7\ N_2 + 12\ H_2O \text{ (nur } NO_2 \text{ im Abgas, langsamer)}$$

Insbesondere bevorzugt ist die Verwendung des erfindungsgemäßen Katalysators in einem Kraftfahrzeug, besonders bevorzugt in Kombination mit einem Oxidationskatalysator, vorzugsweise nachgeschaltet.

Der erfindungsgemäße formstabile Festkörper kann auch für die katalytische Oxidation von $SO_2$ verwendet werden.

Weiterhin ergeben sich für die erfindungsgemäße Zusammensetzung und die hiervon abgeleiteten Produkte Anwendungsgebiete in der *Rohölverarbeitung.* Als Katalysatorträger für die Hydrodesulfurierung kann Aufschlussrückstand oder eine Mischung aus Aufschlussrückstand mit zusätzlichem Titandioxid, z.B. einem herkömmlich als Träger verwendetem $TiO_2$ genutzt werden. Vor dem Versetzen mit der katalytisch aktiven Komponente (II) kann der Aufschlussrückstand mit dem zusätzlichem Titandioxid vermischt werden, das überwiegend in Anatasform vorliegt, also ein durch Röntgendiffraktometrie bestimmtes Anatas-Rutil-Verhältnis von größer als 90:10, besonders bevorzugt größer als 99:1, aufweist, und außerdem vorzugsweise eine BET-Oberfläche von 40 bis 350 $m^2/g$ aufweist. Die katalytisch aktive Komponente (II) wird vorzugsweise ausgewählt aus einer Molybdän-, Eisen-, Nickel-, oder Cobaltverbindung oder aus einer Kombination oder gemeinsamen Verbindung. Bevorzugt werden $CoMo/TiO_2$, $NiMo/TiO_2$ oder $FeMo/TiO_2$ als katalytisch aktive oxidische Systeme eingesetzt, beispielsweise mit einer Zusammensetzung von 5 bis 15 Gew.-% Mo und 0,1 bis 0,8 Gew.-% Fe im genannten System $FeMo/TiO_2$.

Darüber hinaus eignet sich der Aufschlussrückstand bzw. die erfindungsgemäßen, hiervon abgeleiteten Produkte aufgrund ihrer Feinteiligkeit und ihres hohen $TiO_2$-Gehaltes sehr gut zur Verwendung als *Oxidationskatalysator,* bevorzugt als Katalysator zur partiellen Oxidation von Kohlenwasserstoffen und zur oxidativen Synthese organischer Verbindungen, besonders bevorzugt als Katalysator zur Synthese von organischen Säuren, Aldehyden und Säureanhydriden wie zum Beispiel Phthalsäureanhydrid oder Maleinsäureanhydrid. Im Falle der Anwendung als Oxidationskatalysator, zum Beispiel bei der Selektiven Oxidation, kann der Fachmann durch gezielte Variation des aufzubringenden Vanadiumoxidgehaltes die Aktivität und Selektivität in einem gegebenen Temperaturbereich leicht steuern. Die Wahl der aufzubringenden Mengen erfolgt durch gezielte Mengenvariation in entsprechenden Versuchsreihen, wie zum Beispiel für ein vanadium- und titanhaltiges System offenbart in (G. C. Bond et al., Journal of Catalysis 57 (1979) 476-493).

Der Fachmann kann hierbei durch gezielte Variation des aufzubringenden Vanadiumoxidgehaltes nicht nur die die Aktivität und Selektivität in einem gegebenen Temperaturbereich leicht steuern, sondern auch durch planmäßige Einstellung des Vanadiumoxidgehaltes und Promotorengehaltes in Versuchsreihen zu optimieren. Beispielhaft ist bei der Synthese von Phthalsäureanhydrid aus ortho-Xylol der Vanadiumoxidgehalt und Promotorengehalt (zum Beispiel Cäsium-, Phosphor- oder Antimonverbindungen) in Versuchsreihen zu optimieren, und der optimale Bereich der Katalysatorzusammensetzung wird dabei so gewählt, dass sowohl eine unvollständige Unteroxidation, die mit Ertragsverlust und unvollständiger Umsetzung des ortho-Xylols einhergeht, als auch eine Überoxidation vermieden wird. Beispielhaft kann ein Katalysator auf Basis des erfindungsgemäßen des Aufschlussrückstandes die folgende Zusammensetzung aufweisen: $V_2O_5$ 0 bis 30, bevorzugt 5 bis 15 Gew.-%, $Sb_2O_3$ 0 bis 5, bevorzugt 0,5 bis 3 Gew.-%, Cs 0 bis 5, bevorzugt 0,5 bis 2 Gew.-%, P 0 bis 5, bevorzugt 0,5 bis 3 Gew.-%, restliche Anteile Aufschlussrückstand und ggf. weitere Bestandteile.

Sehr gut geeignet ist der Aufschlussrückstand bzw. die erfindungsgemäßen, hiervon abgeleiteten Produkte aufgrund ihrer Feinteiligkeit, ihres hohen $TiO_2$-Gehaltes und ihres variabel einstellbaren Sulfatgehaltes als *Katalysator für Isomerisierungsreaktionen,* besonders für die Bildung von Isobutan aus Butan, Camphen aus $\alpha$-Pinen. Bislang ist für diese Reaktionen vor allem die Verwendung binärer Metalloxide wie zum Beispiel $TiO_2$, $Fe_2O_3$ oder $ZrO_2$ offenbart (Zeitschrift für Physikalische Chemie 130 (1982) 205-209).

Weiterhin stellen Aufschlussrückstand bzw. die erfindungsgemäßen, hiervon abgeleiteten Produkte geeignete Katalysatoren sowie Katalysatorträger für eine Reihe wichtiger Prozesse dar, wie zum Beispiel *Epoxidierungsreaktionen* (kostengünstige und ressourcenschonende Herstellung von Propanoxid), *Aldol-Reaktionen* (Reaktion von Acetaldehyd zu Crotonaldehyd), *oxidative Dehydrogenierungen* (ODH, Reaktion von Propan mit Sauerstoff zu Propen und Wasser unter Verwendung eines vanadiumhaltigen Titankonzentrates bzw. der erfindungsgemäßen Produkte), *Amidierungsreaktionen, heterogen katalysierte Fischer- Tropsch-Reaktion, Kohleverflüssigung* (CTL coal-to-liquids, GTC gas to coal, GTL gas to liquid), *Hydrogenierungsreaktionen* oder zum Beispiel auch die *Methanolsynthese* unter Verwendung eines kupferhaltigen Titankonzentrates bzw. der erfindungsgemäßen Produkte.

Für den Aufschlussrückstand und die hiervon abgeleiteten Produkte ergeben sich unter umweltkatalytischen Gesichtspunkten zudem Anwendungsgebiete in der Abgasnachbehandlung. Der Aufschlussrückstand bzw. die erfindungsgemäßen, hiervon abgeleiteten Produkte eignen sich aufgrund ihrer erfindungsgemäßen Zusammensetzung, ihres hohen $TiO_2$-Gehaltes, ihrer Feinteiligkeit, der geringen Menge löslicher Salze sehr gut zur Ruß-Oxidation in Automobilanwendungen (soot oxidation), indem ein katalytisch aktives hitzebeständiges Material zur Beschichtung von Partikelfiltern zur Verfügung gestellt wird. Hierzu wird vorzugsweise das Trägermaterial, also entweder der Aufschlussrückstand allein oder die Mischung aus Aufschlussrückstand und zusätzlichem $TiO_2$, mit einer Wolframverbindung und/ oder Vanadiumverbindung versetzt. Ebenso eignet sich ein erfindungsgemäßer $V_2O_5$-haltiger Katalysator zur Zersetzung und Entfernung halogenierter Kohlenwasserstoffe wie z.B. chlorierter Kohlenwasserstoffe, Dioxine, Furane, besonders polychlorierter Dibenzodioxine oder Dibenzofurane, aus Abgasen, wie sie zum Beispiel in Müllverbrennungsanlagen anfallen.

Weiterhin eignet sich der Aufschlussrückstand bzw. die erfindungsgemäßen, hiervon abgeleiteten Produkte aufgrund ihrer erfindungsgemäßen Zusammensetzung, ihres hohen $TiO_2$-Gehaltes, ihrer Feinteiligkeit, der geringen Menge löslicher Salze auch zur Anwendung in *katalytischen Verbrennungsvorgängen,* so zum Beispiel als effizienter Sauerstoffträger, und liefert damit einen wichtigen Beitrag zu verbesserten umweltfreundlicheren Verbrennungsvorgängen fossiler Brennstoffe (chemical-looping combustion).

Weiterhin eignet sich der Aufschlussrückstand bzw. die erfindungsgemäßen, hiervon abgeleiteten Produkte aufgrund ihres variabel einstellbaren Sulfatgehaltes besonders für katalytische Anwendungen, die auf das Vorhandensein oder die Wirkung saurer Zentren auf der Oberfläche beruhen, da die Sulfationen auf der Oberfläche des erfindungsgemäßen Aufschlussrückstands saure Zentren ausbilden oder die Ausbildung solcher sauren Oberflächenfunktionalitäten begünstigen. Bevorzugt geeignet ist der Aufschlussrückstand daher für die Säurekatalyse, besonders bevorzugt für Isomerisierungen. R. Ohnishi et al. (Zeitschrift für Physikalische Chemie 130 (1982) 205-209) offenbart hingegen nur die Einwirkung von $(NH_4)_2SO_4$ auf $TiO_2$, $Fe_2O_3$.

Die Erfindung soll anhand der nachfolgenden Beispiele näher erläutert werden, wobei die Erfindung keineswegs auf diese spezifischen Beispiele beschränkt ist.

Beispiel 1

Zur Beurteilung der katalytischen Aktivität wurden verschiedene Proben TK, TK-V und TK-V-W mit einem erfindungsgemäßen Aufschlussrückstand (im Folgenden als Titankonzentrat oder TK bezeichnet) sowie Vergleichsproben mit verschiedenen herkömmlichen Titandioxiden (Ti-V-W 1, Ti-V-W 2, Ti-V 3, Ti-V 4) als Katalysatorpulver betrachtet. Hierzu wurde die katalytische Aktivität im Abbau von NO durch eine Ammoniak-SCR-Reaktion in einem Festbettreaktor bestimmt. Zur Bereitstellung der Probe TK eines Titankonzentrates wurde ein bei der Herstellung von Titandioxid nach dem Sulfatverfahren beim schwefelsauren Aufschluss von titanhaltigen Rohstoffen anfallender unlöslichen Aufschlussrückstand mit Natronlauge bis auf einen pH-Wert von 7 bis 8 neutralisiert, dann filtriert und in Form eines Filterkuchens in einem Labortrockenschrank bei 120 °C getrocknet.

Zur Herstellung der vanadium- bzw. wolframhaltigen Proben (TK-V, TK-W und TK-V-W) werden diese mit Ammoniummetavanadat (entsprechend einem $V_2O_5$-Gehalt von 1,5 Gew. % bezogen auf das Gesamtgewicht der Probe) bzw. Ammoniumparawolframat (entsprechend einem $WO_3$-Gehalt von 10 Gew. % bezogen auf das Gesamtgewicht der Probe) in wässriger Lösung bei Raumtemperatur imprägniert, im Trockenschrank 14 h lang bei 150°C getrocknet und anschließend 1 h lang bei einer Temperatur von 400°C kalziniert. Vor dem Einsatz in katalytischen Messungen wurden die Proben durch Pressen, anschließendes Zerkleinern und Sieben in eine Kornfraktion mit Partikeldurchmessern zwischen 255 bis 350 $\mu$m überführt (Siebfraktion).

Um die Belastung des Katalysators zu quantifizieren, wurde die Raumgeschwindigkeit (GHSV, gas hourly space velocity) verwendet. Diese ist definiert als der Quotient aus Gesamtvolumenstrom des Eduktgases und Katalysatorvolumen: GHSV = $V_{Ga5}$ / ($m_{Kat}/\rho_{Kat}$). In diesem Fall wurde ein Gesamtvolumenstrom von 183,4 ml/min über 75 mg des Katalysators geleitet, woraus eine Raumgeschwindigkeit GHSV von 100.000 h$^{-1}$ resultiert. In allen Fällen enthielt das Eduktgasgemisch 1000 ppm NO, 1000 ppm $NH_3$ und 2% $O_2$ in Helium. Die Analyse des Produktgasgemisches erfolgte mittels einer Kombination photometrischer Messgeräte (BINOS) zur Detektion von NO, $NO_2$, sowie $NH_3$.

Für das erfindungsgemäße Titankonzentrat konnte die grundsätzliche vorteilhafte Eignung als DeNOx-Katalysator überraschend gefunden werden, wie in Tabelle 1 und in den Figuren 1 bis 4 näher dargestellt wird. Trotz eines signifikant verringerten Titanoxidanteiles in der Katalysatormasse im Vergleich zu einem reinen Titanoxid führte dies nicht zu einer proportionalen oder überproportionalen Verringerung der katalytischen Aktivität. Die Katalysatoren auf Titankonzentratbasis zeigten in verschiedenen Zusammensetzungen eine gute katalytische Aktivität und Wirkung und stellen somit ein konkurrenzfähiges Material dar.

**Tabelle 1: NO-Umsatz (%)**

| Temperatur (°C) | TK | TK-V | TK-V-W | Ti-V-W 1 | T1-V-W 2 | Ti-V 3 | Ti-V 4 |
|---|---|---|---|---|---|---|---|
| 150 | 18,7 | 0,14 | 1,5 | 2,3 | 2,7 | 2,4 | 0,5 |
| 200 | 20,2 | 1,79 | 4,1 | 9 | 7,1 | 4,4 | 0,7 |
| 250 | 20,7 | 14,4 | 12,1 | 30 | 36 | 13,9 | 3,1 |
| 300 | 24,7 | 47,3 | 49,1 | 53,8 | 54,4 | 29,2 | 9,1 |
| 350 | 40,7 | 73,6 | 93,3 | 83,1 | 78,5 | 53,3 | 26,5 |
| 400 | 40,3 | 80 | 99,2 | 93,2 | 88,7 | 79,6 | 56 |
| 450 | 66,9 | 50 | 90,7 | 94,6 | 87,8 | 89 | 66,6 |
| 500 | 62,1 | 1,75 | 60,0 | 88,3 | 76 | 86,9 | 64,1 |
| 550 | 43,7 | -27,7 | 17,3 | 72,4 | 51,6 | 70,5 | 54,6 |
| 600 | 25,4 | -48,4 | -21,3 | 42,6 | 26 | 31,7 | 27,1 |
| 650 | 6 | -54,1 | -39,9 | 6,5 | 4 | 5,9 | 1,7 |
| 700 | 6,2 | -56,9 | -47,9 | -20,3 | -10.9 | -26,2 | -17,4 |
| 750 | 9 | -56,9 | -61,7 | -41,4 | -15,4 | -44,5 | -22 |

TK = Titankonzentrat (bzw. Aufschlussrückstand) Ti = Titandioxid

W = 10 Gew.% $WO_3$ bezogen auf das Gesamtgewicht der Probe V = 1,5 Gew.% $V_2O_5$ bezogen auf das Gesamtgewicht der Probe Ti-V-W1 = Labormuster: Titandioxidkomponente: Anatas mit einer BET-Oberfläche von 350 m$^2$/g

Ti-V-W 2 = Kommerziell erhältliches Material, crenox A-DW-1 Ti-V 3 = Titandioxidkomponente: Anatas mit einer BET-Oberfläche von 90 m$^2$/g

Ti-V 4 = Titandioxidkomponente: Anatas mit einer BET-Oberfläche von 350 m$^2$/g

In Figur 2 (bzw. den Spalten 1 bis 4 der obigen Tabelle) ist die katalytische Aktivität als Funktion der Temperatur angegeben. Es zeigt sich, dass:

- Reiner, salzfrei gewaschener Aufschlussrückstand (TK) einen katalytischen Wirkungsgrad von über 60% (im Temperaturbereich von 450 bis 500°C) erreicht. Daneben ist auffällig, dass auch bei Temperaturen über 700°C keinerlei unerwünschte NO-Bildung eintritt
- Reiner, salzfrei gewaschener Aufschlussrückstand mit Zusatz von 1,5 Gew.% $V_2O_5$ (TK-V) einen katalytischen Wirkungsgrad von über 70% (im Temperaturbereich von 350 bis 400°C) erreicht.
- Reiner, salzfrei gewaschener Aufschlussrückstand mit Zusatz von 1,5 Gew.% $V_2O_5$ sowie 10 Gew.% $WO_3$ (TK-V-W) einen katalytischen Wirkungsgrad von über 90% (im Temperaturbereich von 350 bis 450°C) erreicht.

In Figur 3 (bzw. den Spalten 3, 7 und 8 der obigen Tabelle) ist die katalytische Aktivität als Funktion der Temperatur für einen erfindungsgemäßen Aufschlussrückstand mit Zusatz von 1,5 Gew.% $V_2O_5$ (TK-V, Spalte 3) im Vergleich mit zwei Titandioxidvarianten mit Zusatz von 1,5 Gew.% $V_2O_5$ als Referenz angegeben (Ti-V3, Spalte 7 und Ti-V-4, Spalte 8). Ti-V-3 weist eine spezifische Oberfläche von ca. 90 m²/g; Ti-V-4 weist eine spezifische Oberfläche von ca. 350 m²/g auf.

Es zeigt sich dass reiner, salzfrei gewaschener Aufschlussrückstand mit Zusatz von 1,5% $V_2O_5$ über den gesamten Temperaturbereich eine akzeptable Aktivität aufweist und im niedrigen Temperaturbereich sogar einen besseren, katalytischen Wirkungsgrad als die Referenzmaterialien erreicht.

In Figur 4 (bzw. den Spalten 4 bis 6 der obigen Tabelle) ist die katalytische Aktivität als Funktion der Temperatur für einen erfindungsgemäßen Aufschlussrückstand mit Zusatz von 1,5 Gew.% $V_2O_5$ sowie 10 Gew.% $WO_3$ (TK-V-W, Spalte 4) im Vergleich mit zwei Titandioxidvarianten mit Zusatz von 1,5 Gew.% $V_2O_5$ sowie 10% $WO_3$ als Referenz angegeben (Ti-V-W1, Spalte 5 und Ti-V-W2, Spalte 6). Ti-V-W1 (Laborprodukt) und Ti-V-W2 (großtechnisch hergestelltes Produkt) weisen eine spezifische Oberfläche von 350 bzw. ca. 90 m²/g auf.

Es zeigt sich dass reiner, salzfrei gewaschener Aufschlussrückstand mit Zusatz von 1,5 Gew.% $V_2O_5$ sowie 10 Gew.% $WO_3$ bis zu einer Temperatur von ca. 500°C einen sehr hohen und mit den Referenzmaterialien vergleichbaren Wirkungsgrad und teilweise sogar besseren Wirkungsgrad erreicht.

Beispiel 2

Es wurde die katalytische Aktivität für einen erfindungsgemäßen Aufschlussrückstand mit Zusatz von 1,5% $V_2O_5$ sowie 10% $WO_3$ untersucht, wobei der Aufschlussrückstand vor der Zugabe der V- und der W-Verbindung in unterschiedlicher Weise vorbehandelt worden war.

Gewaschene Aufschlußrückstände wurden nach der Filtration (Membranfilterpresse) folgendermaßen präpariert. Ausgangsmaterial war jeweils der Filterpressen-Abwurf (MFP-Abwurf) mit einem Feststoffgehalt von 75,4 % (IR-Trockner), pH 1,6 (10%ige Suspension). Dann wurden die Aufschlussrückstände, wie unter den Varianten A bis F beschrieben, behandelt.

A Trocknung (säurehaltig); 150 g MFP-Abwurf wurden bei 130 °C im Umlufttrockenschrank getrocknet. Dann erfolgte eine Zerkleinerung im Mörser. Bestandteile < 100 μm wurden abgesiebt. Ausbeute: 119 g

B Neutralisation mit Natronlauge + Trocknung (salzhaltig) 150 g MFP-Abwurf wurden mit ca. 500 ml VE-Wasser auf einem Magnetrührer angemaischt (pH 1,3). Die resultierende Suspension wurde dann mit 12,0 g konzentrierter Natronlauge auf einen pH-Wert von 7 eingestellt und bei 130°C im Umlufttrockenschrank getrocknet. Anschließend erfolgte eine Zerkleinerung im Mörser. Bestandteile <100μm wurden abgesiebt. Ausbeute: 123g

C Neutralisation mit Natronlauge + Filtration + Trocknung (salzarm) 150 g MFP-Abwurf wurden mit ca. 500 ml VE-Wasser auf einem Magnetrührer angemaischt (pH 1,3). Die Suspension wurde dann mit 11,9g konzentrierter Natronlauge auf einen pH-Wert von 7 eingestellt und über doppeltes Schwarzbandfilter filtriert. Der resultierende Filterkuchen wurde bei 130°C im Umlufttrockenschrank getrocknet. Anschließend erfolgte eine Zerkleinerung im Mörser. Bestandteile <100μm wurden abgesiebt. Ausbeute: 112g

D Neutralisation mit Natronlauge + Filtration + Wäsche + Trocknung (salzfrei) 150 g MFP-Abwurf wurden mit ca. 500 ml VE-Wasser auf einem Magnetrührer angemaischt (pH 1,3). Die Suspension wurde dann mit 12,3g konzentrierter Natronlauge auf einen pH-Wert von 7 eingestellt und über doppeltes Schwarzbandfilter filtriert. Danach wurde mit 21 VE-Wasser gewaschen. Der resultierende Filterkuchen wurde bei 130°C im Umlufttrockenschrank getrocknet. Anschließend erfolgte eine Zerkleinerung im Mörser. Bestandteile <100μm wurden abgesiebt. Ausbeute: 110g

E Neutralisation mit Natronlauge + Sprühtrocknung (salzhaltig) Der MFP-Abwurf wurde mit Natronlauge auf einen pH-Wert von 8 eingestellt und sprühgetrocknet

Neutralisation mit Natronlauge + Filtration + Sprühtrocknung (salzarm) Der MFP-Abwurf wurde mit Natronlauge auf einen pH-Wert von 8 eingestellt, filtriert, erneut mit Wasser angemaischt und sprühgetrocknet.

Der Zusatz von Vanadium und Wolfram, die Herstellung der Messproben sowie die Messung der NO-Umsätze erfolgte in gleicher Weise wie in Beispiel 1 beschrieben.

Figur 5 zeigt die katalytischen Aktivitäten (NO-Umsätze) der erfindungsgemäßen Zusammensetzungen der Beispiele 2A bis 2F mit 1,5 Gew.% $V_2O_5$ und 10 Gew.% $WO_3$ im Vergleich zu einem herkömmlich geträgerten $V_2O_5$-$WO_3$-Katalysator auf einem Anatas-$TiO_2$-Träger (Ti-V-W) im Temperaturbereich von 150 °C bis 750 °C.

Es zeigt sich, dass das Auswaschen von Salzen (in Form von Natriumsulfat) besonders vorteilhaft für die katalytische Wirksamkeit ist.

**Patentansprüche**

1. Zusammensetzung enthaltend

   (I) den bei der Gewinnung von Titandioxid nach dem Sulfatverfahren beim Aufschluss des titanhaltigen Ausgangsstoffes mit Schwefelsäure anfallenden unlöslichen Aufschlussrückstand und
   (II) mindestens eine weitere Komponente, die katalytisch aktiv ist.

2. Zusammensetzung gemäß Anspruch 1, **dadurch gekennzeichnet, dass** der

   (i) Aufschlussrückstand teilweise neutralisiert worden ist,
   (ii) optional die Verunreinigungen des Aufschlussrückstands, insbesondere die Neutralsalze, teilweise ausgewaschen worden sind und
   (iii) optional die Zusammensetzung kalziniert worden ist.

3. Zusammensetzung gemäß Anspruch 1 oder 2, **dadurch gekennzeichnet, dass** der Sulfatgehalt des Aufschlussrückstandes 1,0 bis 6,0 Gew.-%, insbesondere 3,0 bis 5,0 Gew.-%, bezogen auf den Feststoffgehalt des Aufschlussrückstandes, beträgt.

4. Zusammensetzung gemäß einem oder mehreren der vorhergehenden Ansprüche, **dadurch gekennzeichnet, dass** der pH-Wert der Zusammensetzung auf 1 bis 5, insbesondere auf 1,5 bis 3, eingestellt ist.

5. Zusammensetzung gemäß einem oder mehreren der vorhergehenden Ansprüche, **dadurch gekennzeichnet, dass** sie in Form eines Filterkuchens oder einer Suspension mit einem Feststoffgehalt von kleiner als 90 Gew.-%, bevorzugt kleiner als 80 Gew.-%, vorliegt.

6. Zusammensetzung gemäß einem oder mehreren der vorhergehenden Ansprüche, die einem Ti-Gehalt von 6 bis 54 Gew.% aufweist,

7. Zusammensetzung gemäß einem oder mehreren der vorhergehenden Ansprüche, die nach Kalzinierung eine BET-Oberfläche von 3 bis 70 $m^2$/g, vorzugsweise 3 bis 50 $m^2$/g, besonders bevorzugt 5 bis 30 $m^2$/g, aufweist.

8. Zusammensetzung gemäß einem oder mehreren der vorhergehenden Ansprüche, **dadurch gekennzeichnet, dass** sie einen Sulfatgehalt von 0,1 bis 10 Gew.%, bevorzugt 0,5 bis 3,0 Gew.%, bezogen auf den Feststoffanteil der Zusammensetzung, aufweist.

9. Zusammensetzung gemäß einem oder mehreren der vorhergehenden Ansprüche, **dadurch gekennzeichnet, dass** die durch Röntgenpulverdiffraktometrie bestimmte Intensität des Rutil-Hauptreflexes bei 2theta = 27,5° mindestens 10 % der Intensität des intensivsten aller übrigen Reflexe eines Röntgenpulverdiagramms, bevorzugt mindestens 30%, besonders bevorzugt mindestens 80%, beträgt.

10. Zusammensetzung gemäß einem oder mehreren der vorhergehenden Ansprüche, **dadurch gekennzeichnet, dass** die Zusammensetzung neben dem im Aufschlussrückstand enthaltenen Titandioxid zusätzliches Titandioxid in der Anatasform enthält, wobei das Gewichtsverhältnis von Aufschlussrückstand zu dem zusätzlichen Titandioxid größer als 50:50, bevorzugt größer als 70:30, ist.

11. Zusammensetzung gemäß einem oder mehreren der vorhergehenden Ansprüche, **dadurch gekennzeichnet, dass** die Zusammensetzung mindestens 0,05 Gew.%, bevorzugt mindestens 0,5 Gew.%, der Komponente (II), bezogen auf den Feststoffgehalt der Zusammensetzung, enthält, wobei die Komponente (II) mindestens ein Element enthält, das aus der Gruppe ausgewählt wird, die aus Pt, Pd, Rh, Ru, Au, Ag, Co, Cu, Ce, Ni, V, W, Mo, Sb, Bi, W, La, Y, Sc, Zr, Hf, Ta, Tb, Ce, Yb, Er, und Sm besteht.

12. Zusammensetzung gemäß Anspruch 11, **dadurch gekennzeichnet, dass** die Zusammensetzung eine oder mehrere Wolfram- und/oder Vanadiumverbindungen als Komponente (II) enthält, wobei die Zusammensetzung mindestens 1,0 Gew.% an Wolfram, berechnet als $WO_3$, und/oder mindestens 0,05 Gew.% an Vanadium, berechnet als $V_2O_5$, bezogen auf den Feststoffgehalt der Zusammensetzung, enthält.

13. Verfahren zur Herstellung der Zusammensetzung gemäß einem oder mehreren der vorhergehenden Ansprüche, wobei das Verfahren folgende Schritte umfasst:

   (a) Aufschluss eines titanhaltigen Ausgangsstoffes mit Schwefelsäure um eine feststoffhaltige Aufschlusslösung zu erhalten;
   (b) Abtrennen der in der Aufschlusslösung enthaltenen Feststoffe, um einen Aufschlussrückstand und eine im Wesentlichen feststofffreie Aufschlusslösung zu erhalten;
   (c) optional Neutralisieren und/oder teilweises Auswaschen der Verunreinigungen, insbesondere der Neutralsalze;
   (d) Mischen des Aufschlussrückstands mit mindestens einer weiteren Komponente, die katalytisch aktiv ist, und
   (e) optional Kalzinieren der erhaltenen Mischung.

14. Verwendung einer Zusammensetzung gemäß einem oder mehreren der Ansprüche 1 bis 12 als Katalysator oder zur Herstellung eines Katalysators.

15. Verwendung des bei der Gewinnung von Titandioxid nach dem Sulfatverfahren beim Aufschluss des titanhaltigen Ausgangsstoffes mit Schwefelsäure anfallenden unlöslichen Aufschlussrückstandes zur Herstellung eines Katalysators.

16. Katalysator oder Katalysatorrohstoff enthaltend eine Zusammensetzung gemäß einem oder mehreren der Ansprüche 1 bis 12.

17. Formstabiler, katalytisch aktiver Festkörper, erhältlich durch

   (i) Mischen von Aufschlussrückstand oder der Zusammensetzung gemäß einem oder mehreren der Ansprüche 1 bis 12 mit Bindemitteln, Weichmachern und ggf. weiteren Additiven, Formgebung der so erhaltenen Zusammensetzung, bevorzugt durch Extrudieren, und anschließender Kalzinierung
   oder
   (ii) Aufbringen von Aufschlussrückstand oder der Zusammensetzung gemäß einem oder mehreren der Ansprüche 1 bis 12 ggf. zusammen mit Bindemitteln, Weichmachern und/oder weiteren Additiven, auf ein Trägermaterial und anschließende Kalzinierung.

**Figur 1**

**Figur 2**

**Figur 3**

**Figur 4**

Figur 5

Europäisches
Patentamt

European
Patent Office

Office européen
des brevets

## EUROPÄISCHER RECHERCHENBERICHT

**Nummer der Anmeldung**

EP 10 18 8521

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/015259 A1 (SACHTLEBEN CHEMIE GMBH [DE]; AMIRZADEH-ASL DJAMSCHID [DE]) 7. Februar 2008 (2008-02-07) * Seite 5, Zeile 10 * * Seite 6, Zeile 12 - Seite 7, Zeile 24 * * Seite 8, Zeilen 1,13 * ----- | 1,2,6, 13-16 | INV. B01J21/06 B01J23/22 B01J23/30 B01J37/00 B01D53/86 |
| X | DE 10 2007 055751 A1 (SACHTLEBEN CHEMIE GMBH [DE]) 12. Juni 2008 (2008-06-12) * Absätze [0021], [0036] - [0038], [0040], [0043] - [0044], [0052], [0054] * * Ansprüche 1,5,14,15,17,20 * ----- | 17 | |
| A | DE 103 36 650 A1 (SACHTLEBEN CHEMIE GMBH [DE]) 24. Februar 2005 (2005-02-24) * Absatz [0004] * * Anspruch 3 * ----- | 17 | |

| | | | RECHERCHIERTE SACHGEBIETE (IPC) |
|---|---|---|---|
| | | | B01J B01D |

Der vorliegende Recherchenbericht wurde für alle Patentansprüche erstellt

| Recherchenort | Abschlußdatum der Recherche | Prüfer |
|---|---|---|
| München | 4. März 2011 | Jourdan, Angelika |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 10 18 8521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2011

| Im Recherchenbericht angeführtes Patentdokument | Datum der Veröffentlichung | Mitglied(er) der Patentfamilie | Datum der Veröffentlichung |
|---|---|---|---|
| WO 2008015259 A1 | 07-02-2008 | AU 2007280418 A1<br>CA 2659526 A1<br>CN 101600668 A<br>EP 2049451 A1<br>JP 2009545672 T<br>KR 20090045306 A<br>RU 2009106950 A<br>US 2009270243 A1 | 07-02-2008<br>07-02-2008<br>09-12-2009<br>22-04-2009<br>24-12-2009<br>07-05-2009<br>10-09-2010<br>29-10-2009 |
| DE 102007055751 A1 | 12-06-2008 | KEINE | |
| DE 10336650 A1 | 24-02-2005 | BR PI0413434 A<br>CN 1871363 A<br>EP 1656461 A2<br>WO 2005014867 A2<br>US 2009118115 A1<br>US 2006236894 A1 | 10-10-2006<br>29-11-2006<br>17-05-2006<br>17-02-2005<br>07-05-2009<br>26-10-2006 |

EPO FORM P0461

Für nähere Einzelheiten zu diesem Anhang : siehe Amtsblatt des Europäischen Patentamts, Nr.12/82

EP 2 444 150 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5723404 A
- WO 2006044768 A

- DE 19725018 B4

**In der Beschreibung aufgeführte Nicht-Patentliteratur**

- *Applied Catalysis A: General,* 2001, vol. 222, 221-236
- **ULLMANN.** Encyclopedia of Industrial Chemistry. vol. A20, 276-278
- **H. KRISCHNER ; B. KOPPELHU-BER-BITSCHNAU.** Röntgenstrukturanalyse und Rietveldmethode. Friedr. Vieweg & Sohn Verlagsgesellschaft mbH, 1994

- Industrial Inorganic Pigments. Wiley-VCH, 2005
- **G. C. BOND et al.** *Journal of Catalysis,* 1979, vol. 57, 476-493
- *Zeitschrift für Physikalische Chemie,* 1982, vol. 130, 205-209
- **R. OHNISHI et al.** *Zeitschrift für Physikalische Chemie,* 1982, vol. 130, 205-209